(19) **Europäisches Patentamt / European Patent Office / Office européen des brevets**

(11) **EP 4 273 008 A1**

(12) **EUROPEAN PATENT APPLICATION**

(43) Date of publication:
**08.11.2023 Bulletin 2023/45**

(21) Application number: **22171230.0**

(22) Date of filing: **03.05.2022**

(51) International Patent Classification (IPC):
**B60W 10/04** (2006.01) **B60W 40/068** (2012.01)
**G01L 3/10** (2006.01)

(52) Cooperative Patent Classification (CPC):
**B60W 40/068; B60W 10/04; G01L 3/109;
G01M 13/022; B60W 2050/0008; B60W 2422/95;
B60W 2510/12; B60W 2510/125; B60W 2520/26;
B60W 2520/28; B60W 2520/30; B60W 2710/083**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Scania CV AB**
**151 87 Södertälje (SE)**

(72) Inventors:
 • ZAMANI, Sebastian
 **141 31 Huddinge (SE)**

 • **LARSSON, Anders**
 **146 49 Tullinge (SE)**
 • **WALLENTIN, Per**
 **153 30 Järna (SE)**
 • **GUSTAFSSON, Tobias**
 **151 34 Södertälje (SE)**
 • **HÄLLMAN, Oscar**
 **151 47 Södertälje (SE)**

(74) Representative: **Scania CV AB
Patents, GP 117kv
151 87 Södertälje (SE)**

(54) **METHOD AND SENSOR ARRANGEMENT FOR WHEEL TORQUE-BASED VEHICLE OPERATION**

(57) The present disclosure relates to a method for operating a vehicle based on wheel torque. According to a first aspect, this disclosure proposes a method for operating a vehicle comprising a drivetrain. The method comprises determining S2, based on angular positions of one or more shafts of the drivetrain at different points along the drivetrain, a windup of the one or more shafts. The method further comprises estimating S3 a wheel torque of one or more wheels arranged on a driven wheel axle 11 of the vehicle based on the determined windup and a stiffness constant representing characteristics of the one or more shafts 11a,11b in-between the different points and using S7 the estimated wheel torque while operating the vehicle. The disclosure also relates to corresponding sensor arrangement 200 and computer program, and to a vehicle comprising the sensor arrangement.

Fig. 3

EP 4 273 008 A1

**Description**

Technical field

The present disclosure relates to a method for operating a vehicle based on wheel torque. The disclosure also relates to corresponding sensor arrangement and computer program, and to a vehicle comprising the sensor arrangement.

Background

Traditionally, the torque control of a powertrain is based on an estimated torque of an engine output shaft, which may be calculated based on consumed power, such as electricity or consumed fuel. However, in battery electric vehicle where there is less damping in the drivetrain due to the lack of mechanical components like engine, gearbox, clutch it is important to account for the increased stiffness to avoid oscillations and poor powertrain torque performance. For example, oscillations may cause unnecessary stress on the different powertrain parts and therefore decrease the powertrain longevity. In general, this problem is more significant in modern drivelines of higher efficiency, such as in electrical drivelines lacking gearbox, as reduced friction in the driveline increases risk of oscillations. This is especially important for vehicles in extreme applications like construction or mining vehicles.

By making the wheels speed signals from braking systems and other shaft sensors directly accessible in real time by the torque controller, commonly known as the inverter, some of these oscillations and performance reductions can be reduced. However, there is a need for further improvements in this area.

Summary

It is an object of the disclosure to alleviate at least some of the drawbacks with the prior art. In particular it is an object to provide a way to cancel out non-linearities in the powertrain. These objects and others are at least partly achieved by the method and sensor arrangement according to the independent claims, and by the embodiments according to the dependent claims.

According to a first aspect, this disclosure proposes a method for operating a vehicle comprising a drivetrain. The method comprises determining, based on angular positions of one or more shafts of the drivetrain at different points along the drivetrain, a windup of the one or more shafts. The method further comprises estimating a wheel torque of one or more wheels arranged on a driven wheel axle of the vehicle based on the determined windup and a stiffness constant representing characteristics of the one or more shafts in-between the different points and using the estimated wheel torque while operating the vehicle. By estimating the wheel (angular) position instead of the wheel speed the wheel torque can be calculated directly. The estimated wheel torque may be used in a variety of applications to improve vehicle efficiency, comfort and quality.

In some embodiments, the method comprises measuring the angular positions using angular position sensors arranged along the driven wheel axle and wherein the determining comprises determining a windup of the driven wheel axle based on an angular displacement between the measured angular positions. By measuring a windup of the driven wheel axle an accurate estimation of the wheel torque can be made.

In some embodiments, the measuring is performed continually while operating the vehicle. By continually monitoring angular positions of shafts of the drivetrain it is possible to continually optimize performance and detect deficiencies.

In some embodiments, the angular positions are provided by a plurality of first sensors arranged to measure angular positions of wheels arranged on the driven wheel axle, and at least one second sensor arranged to measure an angular position at a differential gear arranged centrally at the driven wheel axle. This is one example of how the angular position sensors could be arranged along the driven wheel axle.

In some embodiments, the at least one second sensor is arranged to measure an angular position of a drive gear and/or angular positions of side gears, of the differential gear. Hence, angular position sensors may be arranged to measure various angular positions within the differential gear.

In some embodiments, the determining comprises, upon the differential gear being open, determining a windup of the entire driven wheel axle, based on a difference between an observer angle and an angular position of the drive gear of the differential gear, wherein the observer angle is an average of an angular position of a right wheel and an angular position of a left wheel, arranged at opposite ends of the driven wheel axle, and estimating a wheel torque of the left wheel and the right wheel based on a combined stiffness constant of the entire driven wheel axle and the windup of the entire driven wheel axle. In this way wheel torque may be estimated based on a windup of the entire differential using only three angular position sensors.

In some embodiments, the method comprises determining a windup of one side of the driven wheel axle and

2

estimating a wheel torque of one or more wheels arranged on the one side based on a stiffness constant of the one side and the windup of the one side of the driven wheel axle. Hence, windup may alternatively be estimated at one side of the driven wheel axle at a time. Thus, as an example, the windup at the left side of the driven wheel axle may first be estimated and then the windup of the right side of the driven wheel axle may be estimated.

In some embodiments, the method comprises upon the differential gear being closed, determining the windup of the one side based on a difference between an angular position of a wheel arranged at the one side and an angular position of the drive gear. Hence, if the differential is closed the torque is estimated individually for each side.

In some embodiments, the method comprises determining the windup of the one side based on a difference between an angular position of a wheel arranged at the one side and an angular position of a side gear of the differential gear at the one side. In this way wheel torque may be estimated for one side of the driven wheel axle.

In some embodiments, the method comprises determining the stiffness constant based on dimensions and material of the one or more shafts of the drivetrain between the different points. Thus, the stiffness constant may be calculated based on knowledge of material and shape of the shaft.

In some embodiments, the method comprises determining the stiffness constant by applying a predefined torque on the one or more shafts of the drive train, in a test environment and measuring a resulting angular displacement of the ends of the one or more shafts. Hence, the stiffness constant may also be revealed by experimentation.

In some embodiments, the using comprises operating the vehicle and/or diagnosing the vehicle based on the estimated wheel torque. Thus, there are many applications where the estimated wheel torque may be used.

In some embodiments, the using comprises controlling an engine to apply a drive torque on the driven wheel axle, based on the estimated wheel torque. Thereby, performance and comfort may be optimized.

In some embodiments, the controlling is performed based on one or more of: a comfort criterion, a tear/wear criteria, a performance criteria. Hence, various criteria can be applied to the wheel torque in order to achieve various advantages.

In some embodiments, the controlling comprises increasing or decreasing the drive torque upon the wheel torque approaching zero, such that a fast zero crossing is achieved. Thereby, oscillations in the drivetrain may be avoided.

In some embodiments, the method comprises estimating a damping of a gear box of the vehicle by comparing the determined wheel torque and a drive torque of the engine. The damping may be used to diagnose the gear box.

In some embodiments, the method comprises controlling a drive torque applied by the engine based on the estimated damping of the gear box while changing gear. Hence, wear and oscillations may be avoided.

In some embodiments, the method comprises estimating drive torque of an engine of the vehicle, measuring, using wheel speed sensors, wheel speeds of the wheels of the driven wheel axle, and wherein the using comprises estimating efficiency of a powertrain of the vehicle based on a drive torque of an engine of the vehicle, the measured wheel speeds and the estimated wheel torque of the driven wheel axle. Hence, the estimated wheel torque can be used to evaluate power efficiency of the vehicle.

In some embodiments, the using comprises estimating, at a plurality of individual points in time, slip of one or more wheels of the driven wheel axle, and estimating a tire-road friction coefficient by c by analyzing slip for different estimated wheel torques $\tau$. Hence, the estimated wheel torque can be used to estimate friction between the wheels and a surface on which the vehicle stands or travels.

According to a second aspect, the disclosure relates to a sensor arrangement for operating a vehicle comprising a drivetrain. The sensor arrangement comprising angular position sensors and a control arrangement. The angular position sensors are arranged to measure angular positions of one or more shafts of the drivetrain at different points along the drivetrain.

The control arrangement is configured to determine, based on angular positions provided by the plurality of angular position sensors, a windup of the one or more shafts of the drivetrain, to estimate wheel torque of one or more wheels arranged on the driven wheel axle based on the determined windup and a stiffness constant of the driven wheel axle representing characteristics of the one or more shafts in-between the angular position sensors, and to use the estimated wheel torque while operating the vehicle. In further embodiments the control arrangement is configured to perform the method according to any one of the embodiments of the first aspect.

According to a third aspect, the disclosure relates to a vehicle comprising the sensor arrangement of the second aspect.

According to a fourth aspect, the disclosure relates to a computer program comprising instructions which, when the program is executed by a computer, cause the computer to carry out the method according to the first aspect.

According to a fifth aspect, the disclosure relates to a computer-readable medium comprising instructions which, when executed by a computer, cause the computer to carry out the method according to the first aspect.

Brief description of the drawings

Fig. 1 illustrates a drivetrain of a vehicle seen from above.
Fig. 2 illustrates windup of a shaft of the drivetrain
Fig. 3 illustrates a driven wheel axle.
Fig. 4 illustrates a differential gear.
Fig. 5 is a flow chart of the proposed method according to the first aspect.
Fig. 6 illustrates example embodiments of the step (in Fig. 5) of using the estimated wheel torque, in further detail.
Fig. 7 illustrates a control arrangement configured to perform the method.
Fig. 8 illustrates the correlation between the rear axle torque and the risk for rattling.
Fig. 9 illustrates some example friction coefficients that may be determined using wheel torque.

Detailed description

The proposed technique is based on the insight that by measuring a continuous angular position of the wheel(s) of a driven wheel axle, rather than the wheel speed, and compare the wheel angle with other angles in the drivetrain, wheel torque can be calculated directly. In other words, based on angle differences over one or more parts of the drivetrain having well-known stiffnesses, a good estimate of the wheel torque can be obtained.

The estimated wheel torque can for example be used as a feedback signal to the torque controller (also called inverter) of an electrical machine of the drivetrain. By allowing the inverter to control directly towards the angular position of the wheels or wheel torque, disturbances (windup) and non-linearities in the powertrain can be cancelled out. In addition, the inventors have realised that the estimated wheel torque may be used for other purposes to achieve other effects.

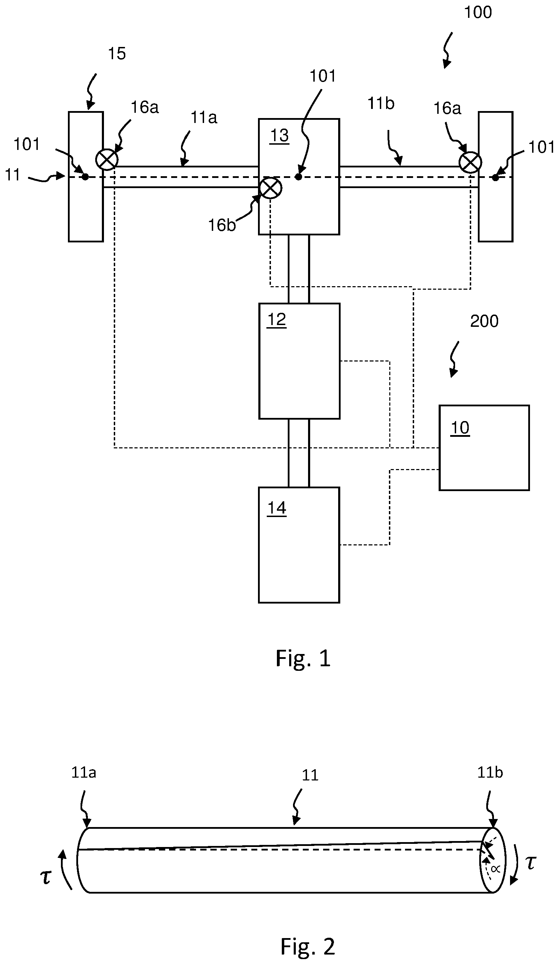

The proposed technique will now be described with reference to Figs. 1-7. Fig. 1 illustrates a powertrain of a vehicle where the proposed technique for operating a vehicle may be implemented. The vehicle may comprise a means for transportation in broad sense and is for example a bus, a truck, or other similar manned or unmanned vehicle.

The vehicle comprises a plurality of electrical systems and subsystems. However, for simplicity only some parts of the vehicle that are associated with the proposed technique are shown in Fig. 1. The powertrain comprises an engine 14 and a drivetrain 100, or driveline. The drivetrain 100 is basically a mechanical system within the vehicle which connects an engine 14 of the vehicle with the wheels 15. The illustrated drivetrain 100 comprises a driven wheel axle 11, a gear box 12, a differential gear 13, a plurality of sensors 16 and a control arrangement 10.

The driven wheel axle 11 herein refers to an axle of the vehicle's driven wheels. The driven wheel axle 11 comprises one or more shafts, here a left shaft 11a and a right shaft 11b. In the illustrated example the driven wheel axle 11 is a split axle with the differential gear 13 arranged between the two axles halves.

The differential gear 13 is an arrangement that permits power from the engine 14 to be transmitted to the pair of driving wheels 15. The gear box 12 is arranged to transfer energy from the engine 14 and is used to increase or decrease torque while reducing or increasing speed. The engine 14 is here an electrical machine, but it should be appreciated that the proposed technique may be used for any type of engine.

An angular position sensor 16 is a mechatronic device that measures and converts mechanical rotation into an electrical signal. The angular position sensors 16a, 16b are arranged to measure angular positions of one or more shafts of the drivetrain 100, at different points along the drivetrain 100. When the shafts of the drivetrain rotate around an axis of rotation, the angular position refers to a rotational orientation of the shaft with respect to a specified reference position. The angular position is expressed as the amount of rotation in radians (degrees, revolutions) about the axis of rotation that is required to change to the reference position. For example, angular position is measured by a tooth wheel sensor, having a certain reference position.

Angular displacement refers to a difference between two angular positions. Angular displacement is a vector quantity, which means that angular displacement has a size and a direction associated with it. For example, a tooth wheel sensor that scans a tooth wheel, arranged on shafts of the drivetrain 100 is used. The tooth wheel sensor may for example comprise two hall effect sensors, a rare earth magnet and appropriate evaluation electronics. The field of the magnet is modulated by the passing target teeth. This modulation is registered by the Hall sensors, converted by a comparator stage to a square wave signal and amplified in a driver stage. The signal also comprises additional position information about where in the cycle the tooth wheel is, e.g. indicated by one or more long pulses caused by one or more long teeth on the tooth wheel positioned at pre-determined positions on the tooth wheel. By measuring the angular positions continuously, it is possible to when needed, while couplings in the drivetrain may change, introduce new reference points for parts of, or the entire, drivetrain.

In the illustrated example the angular position sensors 16a, 16b are arranged along the driven wheel axle 11, but in some embodiments the angular position sensors 16a, 16b are arranged along other shafts of the drivetrain 100, such as closer to the engine 14.

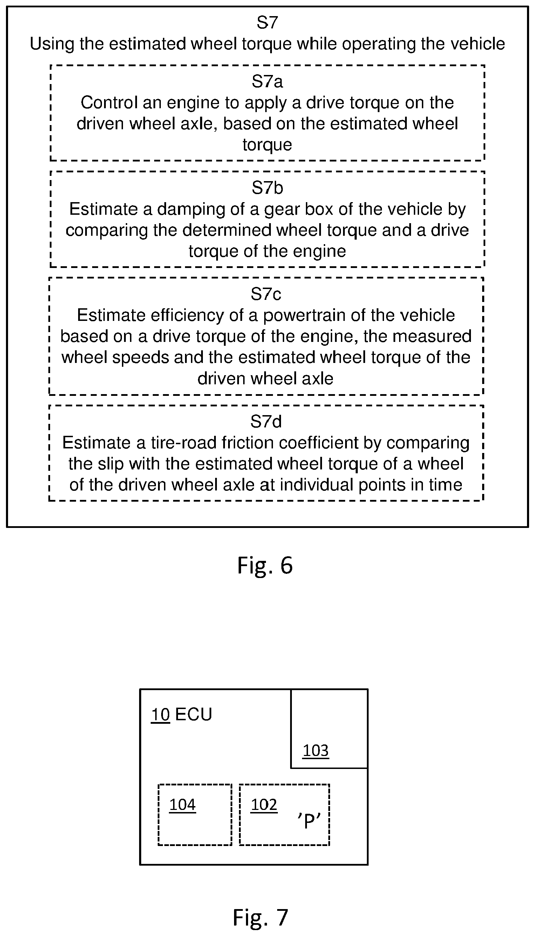

The control arrangement 10 is configured to perform the proposed method for operating a vehicle. The control arrangement 10 is described in further detail in Fig. 7. The control arrangement 10 and the angular position sensors 16a, 16b form the proposed sensor arrangement 200 for operating a vehicle.

The proposed technique is based on measuring windup of the driven wheel axle 11 to estimate wheel torque. Windup occurs when ends of a shaft rotate at different speeds. In a perfectly rigid driven wheel axel 11 both ends would rotate synchronously. However, because the shafts 11a, 11b are to some extent elastic, there will in reality be an angular difference between ends of the shafts 11a, 11b, albeit exceedingly small. Hence, drivetrain windup is caused by torsion of the shafts of the drivetrain caused by for example engine or brake torque. Fig. 2 illustrates windup of a shaft 11a, 11b of the driven wheel axle 11. The angular difference $\alpha$ between the ends 101 of the driven wheel axle 11 is the windup, caused by the torque applied to the respective ends, caused by friction or brake torque on one side and engine torque on the other.

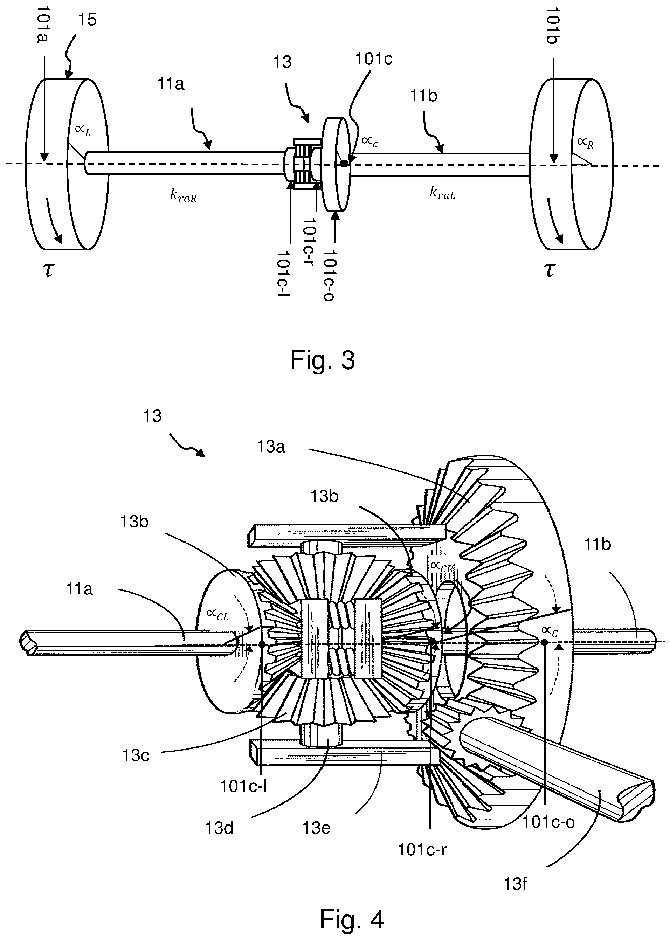

Fig. 3. illustrates a driven wheel axle 11 if the drivetrain 100 in Fig 1 in further detail. The driven wheel axle 11 comprises two shafts 11a, 11b arranged on each side of the differential gear 13. Angular position sensors (not shown) are arranged along the driven wheel axle 11. The angular position sensors are arranged to measure an angular position at different points 101 (individually denoted a (left wheel), b (right wheel), c-o (centre-observer), c-l (centre-left), c-r (centre-right)) along the driven wheel axle 11. The points 101 are typically arranged close to the ends of the individual shafts 11a, 11b. Hence, angular position sensors are arranged to measure angular positions at points 101a, 101b close to the outer ends of the shafts 11a, 11b, where the wheels 15 are arranged. In other words, a plurality of first sensors 16a are arranged to measure angular positions $\alpha_L$, $\alpha_R$ of wheels 15 arranged on the driven wheel axle 11. In other words, an angular position $\alpha_L$ of a left wheel and an angular position $\alpha_R$ of a right wheel are measured. It should be appreciated that this means that the angle is measured at the wheels 15 or close to the connection between the shafts and the wheels 15.

In addition, angular position sensors are arranged to measure angular positions at one or more points 101c-r, 101c-l, 101c-o close to the inner ends of the shafts 11a, 11b, such as at a differential gear 13. In other words, at least one second sensor (not shown) is arranged to measure an angular position $\alpha_C$ at a differential gear 13 arranged centrally at the driven wheel axle 11.

Fig. 4 illustrates angular sensor placement at a differential gear in further detail. The differential gear comprises a drive gear 13a, or crown wheel, and a casing 13e connected thereto. The drive gear 13a is driven by a differential input shaft 13f. The differential further comprises differential pinion gears 13c arranged on differential pins 13d, wherein the differential pins 13d are connected to the differential casing 13e. The differential gear 13 comprises a left side gear, which is mounted on a left shaft 11a for conjoint rotation, and a right-side gear, which is mounted on a right shaft 11b for conjoint rotation. Differential gears are commonly known in the art and will therefore not be described in detail.

To measure an angular position at the inner end of the shafts 11a, b of the driven wheel axle 11, the angular position sensor should be arranged to measure an angular position of a part of the differential that rotates with the same speed as the end of the shaft, or at least there need to be a known relation between the speeds. If the differential gear 13 is locked the drive gear 13a and the side gears 13b will all rotate with the same speed. Hence, in this case an angular position sensor 16 may be arranged to measure an angular position $\alpha_C$ of a drive gear 13a and/or angular positions $\alpha_{CL}, \alpha_{CR}$ of the side gears 13b, of the differential gear 13. However, if the differential is open it is a bit more complicated and there are different options as will be described below.

Estimation of wheel torque based on angular positions of one or more shafts 11a, 11b of the drivetrain 100 at different points 101 along the drivetrain 100 will now be described in further detail, with reference to Figs. 3 and 4. In this example, sensors are arranged at the wheels 15 and at the differential 13. However, it must be appreciated that other sensor placements are possible. However, in general it is desirable to measure as close to the wheels 15 as possible.

Based on the assumption that the mass of the shafts 11a, 11b and the friction in the differential gear 13 is negligible, it is possible to calculate the torque applied at/by the ends of the shafts for a stationary case, where the torque is equal at both ends of the respective shafts. More specifically, Hooke's law (equation 1) can be applied, which gives that the torque $\tau$ required to wind up a shaft is proportional to the angular displacement $\alpha$.

$$\tau = k \,^* \alpha \qquad\qquad (1)$$

The proportionality constant, herein called the stiffness constant $k$, is based on characteristics, such as dimensions and material, of the one or more shafts 11a, 11b in-between the points 101 where displacement $\alpha$ is measured. The stiffness constant $k$, commonly known as the elastic constant, represents the elastic behavior of an objects, here the body between the points where angular positions are measured.

Hence, for a locked differential the angular position $\alpha_C$ of a drive gear 13a will be the same as the angular position $\alpha_{CL}, \alpha_{CR}$ of one of the side gears 13b, as they all rotate with the same speed. Hence, for a locked differential there is only one center angle, which for simplicity is denoted $\alpha_C$.

For a locked differential gear 13 having only one center point 101c, equation (2) can be used to estimate wheel torque:

$$\tau_x = k_{rax} \, ^*(\alpha_x - \alpha_c) \qquad\qquad (2)$$

The estimation of the torque $\tau_L$, $\tau_R$ has to be performed separately for the left and right wheels, as the input torque is not evenly distributed between the wheels 15 but depends on friction on the wheels 15.

For an open differential, the torque is evenly split between the two shafts 11a, 11b. Hence, rotation speeds of the side gears 13b will depend on the friction torque applied to the wheels 15. Thus, angles within the differential will vary based on variation in resistance among the wheels 15.

One option is to use two angular position sensors 16, one at each side gear 13a. In other words, the wind up of one side (left, L, or right, R) of the driven wheel axle 11 may be calculated based on an angular position $\propto_L$, $\propto_R$ of a wheel 15 arranged at the one side (L or R) and an angular position $\propto_{CL}$, $\propto_{CR}$ of a side gear 13a of the differential gear 13 at the one side (L or R). The wheel torque may then be estimated for the one side using equation (3), and it may be assumed that the torque on the other wheel 15 is the same.

$$\tau_x = k_{rax} \, ^* \, (\alpha_x - \alpha_{cX}) \qquad\qquad (3)$$

As an alternative, an observer angle $\alpha_o$ representing both shafts can be defined by equation (4). The observer angle $\propto_o$ is an average of an angular position $\propto_R$ of the right wheel and an angular position $\propto_L$ of the left wheel, arranged at opposite ends of the driven wheel axle 11. In other words, the observer angle represent an average windup of the shafts 11a, 11b.

$$\propto_o = (\propto_L + \propto_R)/2 \qquad\qquad (4)$$

The wheel torque may then be estimated based on a windup of the entire driven wheel axle 11, due to parallel coupling of the shafts 11a, 11b in the differential gear. The proportionality constant, herein called the stiffness constant $k$, for the entire driven wheel axle 11 will then correspond to the sum of the individual shafts 11a, 11b, due to the parallel coupling, see equation (5).

$$k_{ra} = k_{raL} + k_{raR} \qquad\qquad (5)$$

Hooke's law can then be applied to the entire wheel axle to estimate a wheel torque $\tau_{L,R}$, which is applied to each of the wheels 15, using equation (6).

$$\tau_{L,R} = k_{ra} * \propto_o \qquad\qquad (6)$$

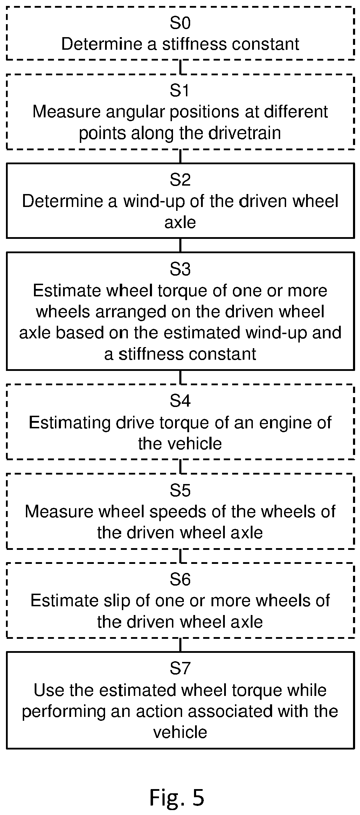

Fig. 5 is a flow chart of the proposed method for operating a vehicle comprising a drivetrain 100 according to the first aspect. The method is performed by a control arrangement 10 (Fig. 1 and Fig. 7) which may be arranged on-board and/or off-board. The control arrangement 10 is for example an ECU of an inverter controlling torque of the engine 14. The method is typically performed in an ongoing manner while operating the vehicle 1.

The method may be implemented as a computer program comprising instructions which, when the program is executed by a computer (e.g., a processor in the control arrangement 10 (Fig. 7)), cause the computer to carry out the method. According to some embodiments the computer program is stored in a computer-readable medium (e.g., a memory or a compact disc) that comprises instructions which, when executed by a computer, cause the computer to carry out the method.

As explained above the wheel torque is estimated based on a stiffness constant representing characteristics of the one or more shafts 11a, 11b of the drive axle 11. The stiffness constant may be obtained in various ways. The stiffness constant may then be preconfigured in the vehicle, such as in the memory 102 of the control arrangement 100 (Fig. 7). This may be done during manufacturing or at a later point in time. There may be one stiffness constant representing characteristics of the entire shaft or a plurality of stiffness constants representing individual parts of the shaft. The method is here described for a driven wheel axle 11, but it must be appreciated that it may be performed for several axles in parallel, such as for a driven boogie axle.

One way to obtain the stiffness constant is to calculate it based on dimensions and material of the shaft. In some embodiments, the method comprises determining S0 the stiffness constant based on dimensions and material of the one or more shafts 11a, 11b of the drivetrain 100 between the different points 101.

Another possibility is to simply make a stress test, where the shafts are winded up in a controlled environment. The stiffness constant may then be calculated based on an angular displacement caused by a known torque. If the same shaft design is used in many vehicles, this test may be performed one time and the same value can be used in several vehicles. In other words, in some embodiments, the method comprises determining S0 the stiffness constant by applying a predefined torque on the one or more shafts of the drivetrain 100, in a test environment and measuring a resulting angular displacement of the ends of the one or more shafts.

In an initial step of the proposed method the control arrangement 10 obtains angular measurement data, i.e., sampled sensor values, from angular position sensors 16a, 16b arranged at different points 101 along the drivetrain 100. The angular measurement data is indicative of angular positions sensed by the sensors 16a, 16b. In the examples herein the position sensors 16a, 16b are arranged along the driven wheel axle 11, but other deployments are also possible. However, the closer to the wheels 15 the angular position sensors 16a, 16b are placed the better accuracy is expected. In other words, in some embodiments, the method comprises measuring S1 angular positions of one or more shafts 11a, 11b of the drivetrain 100 using angular position sensors 16a, 16b arranged along the drivetrain, and in particular along driven wheel axle 11.

The angular positions of the drivetrain 100 may be monitored in an ongoing manner, such as in real-time. In other words, in some embodiments, the measuring S1 is performed continually while operating the vehicle. For example, the angular positions are continually sampled with a certain interval. Thereby it is possible to study windup of the driven wheel axle in an ongoing manner, such as in real-time.

The idea is based on the insight that the measured angular positions can be used to determine the wheel torque as explained above. In other words, the method comprises determining S2, based on angular positions of one or more shafts 11a, 11b of the drivetrain 100 at different points 101 along the drivetrain 100, a windup of the one or more shafts 11a, 11b. For example, the determining S2 comprises determining a windup of the driven wheel axle 11 based on an angular displacement $\propto_\Delta$ between the measured angular positions.

The wheel torque on one or more of the wheels may then be estimated using Hooke's law. Hence, the method comprises estimating S3 a wheel torque $\tau$ of one or more wheels 15 arranged on a driven wheel axle 11 of the vehicle 1 based on the determined windup $\propto$ and a stiffness constant $k$, representing characteristics of the one or more shafts 11a, 11b in-between the different points 101.

The windup may be determined either for an entire axle, such as for the entire driven wheel axel 11 or for individual parts of the driven wheel axle 11, such as for a left and right shaft 11a, 11b. Alternatively, windup of other portions of the driven wheel axle may be determined.

In one example embodiment, the estimation S3 of wheels torque is based on a joint computation of a windup of the entire wheel axle with open differential as explained above. In other words, in these embodiments the determining S2 comprises, upon the differential gear 13 being open, determining S2 a windup of the entire driven wheel axle 11, based on a difference between an observer angle $\propto_o$ and an angular position $\propto_c$ of the drive gear 13a of the differential gear 13. As explained above, the observer angle $\propto_o$ is an average of an angular position $\propto_R$ of a right wheel and an angular position $\propto_L$ of a left wheel, arranged at opposite ends of the driven wheel axle 11. The wheel torque $\tau$ of the left wheel and the right wheel is then estimated S3 based on a combined stiffness constant $k_{ra}$ of the entire driven wheel axle 11 and the windup of the entire driven wheel axle 11.

In other example embodiments, the estimation S3 of wheels torque is based on windup of parts of the driven wheel axle 11, such as for a left side and a right side of the differential gear 13, respectively. In other words, in these embodiments, the determining S2 comprises determining a windup of one side of the driven wheel axle 11. The wheel torque $\tau$ of the of one or more wheels arranged on the one side is then estimated S3 based on a stiffness constant $k_{raL}$, $k_{raR}$ of the one side and the windup of the one side (left or right) of the driven wheel axle 11.

If the differential gear is locked it is possible to estimate wheel torque of both wheels 15 using only one angular position sensor 16. Hence, in some embodiments, the method comprises, upon the differential gear being closed, determining the windup of the one side based on a difference between an angular position of a wheel $\propto_L$, $\propto_R$ arranged at the one side and an angular position $\propto_c$ of the drive gear 13a. In this case the angular position $\propto_c$ of the drive gear 13a is equal to the angular position of any one of the side gears 13b. Hence, only one sensor is required. Though the estimation has to be done for each wheel, as the torque is not evenly split by the differential 13, when it is locked.

If the differential gear 13 is open two sensors arranged centrally on the driven wheel axle are required to determine the windup of the left and right sides individually, as the wheels 15 may rotate with different speeds depending on friction. In the illustrated example, two second sensors 16b arranged to measure angular position $\propto_{CL}$, $\propto_{CR}$ of the respective side gears 13b are used. In these embodiments the determining S2 comprises determining the windup of the one side based on a difference between an angular position of a wheel $\propto_L$, $\propto_R$ arranged at the one side and an angular position $\propto_c$ of a side gear 13a of the differential gear 13 at the one side, as explained above. The wheel torque $\tau$ of the of one or more wheels arranged on the one side is then estimated S3 based on a difference between an angular position of a wheel $\propto_L$, $\propto_R$ arranged at the one side and an angular position $\propto_c$ of the drive gear $\propto_c$.

Further measurements and estimations may be performed for use in combination with the wheel torque for various purposes. In some embodiments the method comprises estimating S4 drive torque of an engine 14 of the vehicle. For example, a drive torque of an electrical engine is estimated based on applied voltage and drawn current. Power of a combustion engine may be estimated based on injected fuel.

In addition to wheel torque, wheel speeds are typically measured. If tooth wheel sensors are arranged at the wheels, they can typically also be used to measure wheel speeds. In some embodiments the method comprises measuring S5, using wheel speed sensors 6, wheel speeds of the wheels 15 of the driven wheel axle 11. In addition, wheels speeds of free-wheeling wheels may also be measured.

In some embodiments the method comprises estimating, at a plurality of individual points in time, slip S6 of one or more wheels 15 of the driven wheel axle 11. Slip is for example measured by comparing wheel speeds of driven and free-wheeling wheels.

The estimated wheel torque can then be used in various different applications. In other words, the method comprises using S7 the estimated wheel torque $\tau$ while operating the vehicle. In other words, the wheel torque may be used to perform one or more actions, or activities associated with the vehicle. For example, operation of the vehicle and/or diagnosing of the vehicle is based on the estimated wheel torque $\tau$.

Fig. 6 illustrates the step of using S7 the estimated wheel torque $\tau$ while operating the vehicle, in further detail. In a first example embodiment the wheel torque is used to optimize comfort, tear and performance associated with propelling the vehicle. In other words, in some embodiments the using comprises controlling S7a an engine to apply a drive torque on the driven wheel axle 11, based on the estimated wheel torque. This is typically done using an inverter controlling torque of the engine 14. Various criteria may be defined in order to optimize for example comfort, tear, and performance. For example, by allowing the inverter to control directly towards the wheel position better driving accuracy is achieved, e.g., in autonomous driving.

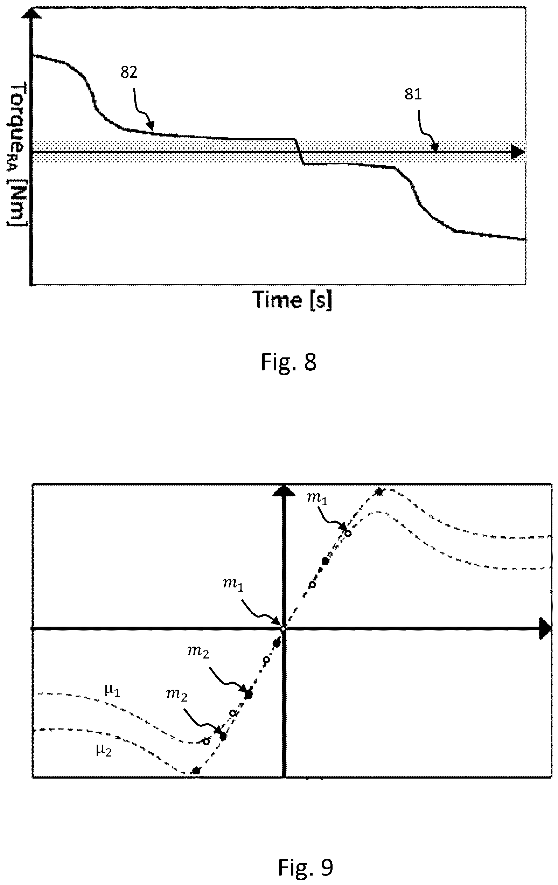

Furthermore, vibration in the drivetrain 100 may occur when internal torques in the powertrain are changing sign/direction, such as during tip in/tip out (i.e., when starting to push or release the gas pedal). The internal torques depends on friction and therefore a lot of factors will influence the vibrations. However, internal torques may be summarised by monitoring the rear axle torque, which corresponds to the wheel torque. Fig. 8 illustrates the correlation between the rear axle torque and the risk for rattling, as a dotted zone 81 which corresponds to wheel torque associated with risk for vibration. Through torque control, one can limit the time the applied torque (illustrated by the curve 82) is within the dotted zone 81, where rattling is at risk, to mitigate the rattling causing comfort problem. This basically means that when the rear axle torque gets close to the zone, the engine torque should be adjusted to cross the area as quickly as possible. This means that it is possible to damp and counteract oscillations in the powertrain to provide a true seamless/smooth acceleration experience and also improve performance. In other words, in some embodiments the controlling S7a of the engine is performed based on a comfort and/or performance criterion. In some embodiments, the controlling S7a comprises increasing or decreasing the drive torque upon the wheel torque approaching zero, such that a fast zero crossing is achieved.

The estimated wheel torque may also be used to avoid driving conditions that put unnecessary stress on the different powertrain parts and therefore decrease the powertrain longevity. This is especially important for vehicles in extreme applications like construction or mining vehicles. Stress is typically high in situations when the deviation between angular positions at different points along the drive train is significant Risk of tear may occur at certain combinations of wheel torque, gear, temperature, wheel speed etc. Criteria may be defined to avoid such situations. In other words, in some embodiments the controlling S7a of the engine is performed based on a tear/wear criteria.

The wheel torque may also be used to estimate damping of a gear box 12. The damping of the gear box 12 may be determined by comparing the wheel torque with the torque right before the gear box 12, such as by an engine torque. When components of the gear box 12 are worn out the damping may increase. Hence, the gear box may be diagnosed based on the wheel torque. In other words, in some embodiments the using S7 comprises diagnosing S7b a damping of a gear box 12 of the vehicle by comparing the determined wheel torque and a drive torque of the engine (estimated in step S4).

It is typically also desirable to change gear without torque in the drivetrain. Today this is typically done when the engine torque is zero. However, there is a risk that friction in the gear box 12 drags around the electric machine. For example, the damping of the gear box is estimated by comparing a wheel torque 900Nm with an engine torque 1000Nm. The damping is thus 100 Nm. When changing gears an engine torque of 100 Nm shall then be applied to achieve a zero torque on the rear axle. In other words, in some embodiments the method comprises, controlling a drive torque applied by the engine 15 based on the estimated damping of the gear box 12 while changing gear.

The estimated wheel torque may also be used for diagnosis of components of the drivetrain 100. In some embodiments, the power at the wheels can be calculated based on the estimated wheel torque in combination with the measured wheel speeds (step S5). The difference between this power and the input power (i.e., DC-current/-voltage for EVs and Fuel consumption for combustion engines) shows a real time efficiency for the complete powertrain. This efficiency can be utilized to ensure that the certified powertrain performance is fulfilled, similar to the On-Board-Diagnostics, OBD, monitor used today. This may be important as such, as drivetrain efficiency might be a subject for future

$CO_2$ emissions requirements and other legislations.

Real-time efficiency of the drivetrain 100 can be presented to a driver, for example as an input similar to today's OBD. This might be a legislation-requirement for future vehicles/powertrains. In other words, in some embodiments the using S7 comprises estimating S7c efficiency of a powertrain of the vehicle based on a drive torque of an engine 14 of the vehicle (estimated in step S4), the measured wheel speeds (estimated in step S5) and the estimated wheel torque of the driven wheel axle 11.

As a further example, friction between the surface and the wheel can be estimated by measuring the slip (step S6) of the driven axle in combination with the torque of the driven axle. This method will give a more accurate result compared to deriving the wheel torque from the engine 14 since a lot of uncertainties does not need to be considered for this method.

In addition, decreasing efficiency can be used as an indication that something is faulty in the powertrain 100. In other words, wear, tear or other errors may be detected by studying changes in the drivetrain efficiency over time. This may also be a safety measure as if a lot of energy generated by the electric motor does not get into the wheels, the difference is probably transformed to heat somewhere in the drivetrain 100, which may cause fatal errors over time. Hence, if the powertrain efficiency goes below a security threshold, there may be a warning indicating that the vehicle should immediately be taken to a service station.

A further possible use relates to estimation of a friction coefficient of the wheels. It is commonly known that friction between the surface and the wheels 15 can be estimated by measuring the slip of wheels 15 arranged on the driven wheel axle (step S6) in combination with the estimated wheel torque of the driven axle 11. Today, friction is typically measured based on the wheel torque derived from the engine 14. However, by using the proposed method for estimating the wheel torque the wheel force can be calculated which gives the possibility to estimate the friction coefficient more accurately and in real-time. This is of course important during acceleration but may be even more important as a traction control input to an autonomously driven vehicle. In other words, in some embodiments the using S7 comprises estimating a tire-road friction coefficient S7d by comparing the slip (estimated in step S6) with the estimated wheel torque of a wheel of the driven wheel axle 11 at individual points in time. Fig. 9 illustrates an example of how the friction coefficients may be estimated based on measurements 91 of slip (x-axis) and estimated torque (y-axis) at individual points in time. In Fig. 9 two sets of measurement $m_1$, $m_2$ have been recorded and mapped into different theoretical friction curves $\mu$. Hence, by measuring slip (step S6) for different estimated wheel torques $\tau$ (such as at different point in time) it is possible to find a matching friction coefficient $\mu$. In other words, in some embodiments the using S7 comprises estimating a tire-road friction coefficient S7d by analyzing slip for different estimated wheel torques $\tau$.

Fig. 7 illustrates a control arrangement 10 configured to implement the proposed method for operating a vehicle, in more detail. In some embodiments, the control arrangement 10 is a "unit" in a functional sense. Hence, in some embodiments the control arrangement 10 is a control arrangement comprising several physical control devices that operate in cooperation. The control arrangement may be arranged on-board and/or at least partly off-board.

The control arrangement comprises a processor 104 and memory 102. The control arrangement 10, or more specifically the processor 104 of the control arrangement 10, is configured to cause the control arrangement 10 to perform all aspects of the method described above and below. This is typically done by running computer program code P stored in the data storage or memory 102 in the processor 104 of the control arrangement 10. The memory 102 may also be configured to store various relevant parameters, such as criteria for controlling drive torque and stiffness constant(s) of the drivetrain 100.

The control arrangement 10 may also comprise a communication interface 103 for communicating with other control units of the vehicle (for example over the ECU) and/or with external systems, such as with an off-board server.

More specifically, the control arrangement 10 is configured to determine, based on angular positions provided by the plurality of angular position sensors 16a, 16b, a windup of the one or more shafts of the drivetrain.

The control arrangement 10 is also configured to estimate wheel torque $\tau$ of one or more wheels 15 arranged on the driven wheel axle 11 based on the determined windup $\propto$ and a stiffness constant k of the driven wheel axle 11 representing characteristics, such as shape, dimensions and material, of the one or more shafts 11a, 11b in-between the angular position sensors 16a, 16b and to use the estimated wheel torque $\tau$ while operating the vehicle.

The terminology used in the description of the embodiments as illustrated in the accompanying drawings is not intended to be limiting of the described method, control arrangement or computer program. Various changes, substitutions and/or alterations may be made, without departing from disclosure embodiments as defined by the appended claims.

The term "or" as used herein, is to be interpreted as a mathematical OR, i.e., as an inclusive disjunction; not as a mathematical exclusive OR (XOR), unless expressly stated otherwise. In addition, the singular forms "a", "an" and "the" are to be interpreted as "at least one", thus also possibly comprising a plurality of entities of the same kind, unless expressly stated otherwise. It will be further understood that the terms "includes", "comprises", "including" and/ or "comprising", specifies the presence of stated features, actions, integers, steps, operations, elements, and/ or components, but do not preclude the presence or addition of one or more other features, actions, integers, steps, operations, elements, components, and/ or groups thereof. A single unit such as e.g., a processor may fulfil the functions of several items recited in the claims.

**Claims**

1. A method for operating a vehicle comprising a drivetrain (100):

   - determining (S2), based on angular positions of one or more shafts (11a, 11b) of the drivetrain (100) at different points (101) along the drivetrain (100), a windup of the one or more shafts (11a, 11b),
   - estimating (S3) a wheel torque ($\tau$) of one or more wheels (15) arranged on a driven wheel axle (11) of the vehicle based on the determined windup ($\propto$) and a stiffness constant (k) representing characteristics of the one or more shafts (11a, 11b) in-between the different points (101),
   - using (S7) the estimated wheel torque ($\tau$) while operating the vehicle.

2. The method of claim 1, wherein the method comprises:

   - measuring (S1) the angular positions using angular position sensors (16a, 16b) arranged along the driven wheel axle (11), and

   wherein the determining (S2) comprises determining (S2a) a windup of the driven wheel axle (11) based on an angular displacement ($\propto_\Delta$) between the measured angular positions.

3. The method according to claim 1 or 2, wherein the measuring (S1) is performed continually while operating the vehicle.

4. The method according to any one of the preceding claims, wherein the angular positions are provided by a plurality of first sensors (16a) arranged to measure angular positions ($\propto_L$, $\propto_R$) of wheels (15) arranged on the driven wheel axle (11), and at least one second sensor (16b) arranged to measure an angular position ($\propto_C$) at a differential gear (13) arranged centrally at the driven wheel axle (11).

5. The method according to claim 4, wherein the at least one second sensor (16b) is arranged to measure an angular position ($\propto_C$) of a drive gear (13a) and/or angular positions ($\propto_{CL}, \propto_{CR}$) of side gears (13b), of the differential gear (13).

6. The method according to any one of the preceding claims, wherein the using (S7) comprises:

   - controlling (S7a) an engine to apply a drive torque on the driven wheel axle (11), based on the estimated wheel torque.

7. The method according to claim 6, wherein the controlling (S7a) comprises increasing or decreasing the drive torque upon the wheel torque approaching zero, such that a fast zero crossing is achieved.

8. The method of any one of the preceding claims, wherein the using (S7) comprises estimating (S7b) a damping of a gear box (12) of the vehicle by comparing the determined wheel torque and a drive torque of the engine 14.

9. The method according to any one of the preceding claims, comprising:

   - estimating drive torque (S4) of an engine (14) of the vehicle.
   - measuring (S6), using wheel speed sensors (6), wheel speeds of the wheels (15) of the driven wheel axle (11), and

   wherein the using (S7) comprises estimating (S7c) efficiency of a powertrain of the vehicle based on a drive torque of an engine (14) of the vehicle, the measured wheel speeds and the estimated wheel torque of the driven wheel axle (11).

10. The method according to any one of the preceding claims, wherein the using (S7) comprises:

    - estimating, at a plurality of individual points in time, slip (S5) of one or more wheels (15) of the driven wheel axle (11), and
    - estimating a tire-road friction coefficient (S7d) by c by analyzing slip for different estimated wheel torques $\tau$.

**11.** A computer program comprising instructions which, when the program is executed by a computer, cause the computer to carry out the method of any one of the claims 1 to 10.

**12.** A computer-readable storage medium comprising instructions which, when executed by a computer, cause the computer to carry out the method of any one of the claims 1 to 10.

**13.** A sensor arrangement (200) for operating a vehicle comprising a drivetrain (100), the sensor arrangement (200) comprising:

- angular position sensors (16a, 16b) arranged to measure angular positions of one or more shafts of the drivetrain (100) at different points (101) along the drivetrain (100),
- a control arrangement (10) configured to:

• determine, based on angular positions provided by the plurality of angular position sensors (16a, 16b), a windup of the one or more shafts of the drivetrain (100),
• estimate wheel torque ($\tau$) of one or more wheels (15) arranged on the driven wheel axle (11) based on the determined windup ($\propto$) and a stiffness constant ($k$) of the driven wheel axle (11) representing characteristics of one or more shafts (11a, 11b) in-between the angular position sensors (16a, 16b),
• use the estimated wheel torque ($\tau$) while operating the vehicle.

**14.** The sensor arrangement (200) according to claim 20, wherein the sensor arrangement (200) is configured to perform the method according to any one of claims 2-10.

**15.** A vehicle comprising the sensor arrangement (200) according to claim 13 or 14.

Fig. 1

Fig. 2

Fig. 3

Fig. 4

```
┌ ─ ─ ─ ─ ─ ─ ─ ─ ─ ─ ─ ─ ─ ─ ─ ─ ─ ─ ─ ┐
│                  S0                   │
│      Determine a stiffness constant   │
└ ─ ─ ─ ─ ─ ─ ─ ─ ─ ─ ┬ ─ ─ ─ ─ ─ ─ ─ ─ ┘
┌ ─ ─ ─ ─ ─ ─ ─ ─ ─ ─ ┴ ─ ─ ─ ─ ─ ─ ─ ─ ┐
│                  S1                   │
│   Measure angular positions at different │
│        points along the drivetrain    │
└ ─ ─ ─ ─ ─ ─ ─ ─ ─ ─ ┬ ─ ─ ─ ─ ─ ─ ─ ─ ┘
┌─────────────────────┴──────────────────┐
│                  S2                   │
│   Determine a wind-up of the driven wheel │
│                 axle                   │
└─────────────────────┬──────────────────┘
┌─────────────────────┴──────────────────┐
│                  S3                   │
│   Estimate wheel torque of one or more │
│    wheels arranged on the driven wheel │
│   axle based on the estimated wind-up and │
│            a stiffness constant        │
└─────────────────────┬──────────────────┘
┌ ─ ─ ─ ─ ─ ─ ─ ─ ─ ─ ┴ ─ ─ ─ ─ ─ ─ ─ ─ ┐
│                  S4                   │
│   Estimating drive torque of an engine of │
│                the vehicle             │
└ ─ ─ ─ ─ ─ ─ ─ ─ ─ ─ ┬ ─ ─ ─ ─ ─ ─ ─ ─ ┘
┌ ─ ─ ─ ─ ─ ─ ─ ─ ─ ─ ┴ ─ ─ ─ ─ ─ ─ ─ ─ ┐
│                  S5                   │
│   Measure wheel speeds of the wheels of │
│           the driven wheel axle        │
└ ─ ─ ─ ─ ─ ─ ─ ─ ─ ─ ┬ ─ ─ ─ ─ ─ ─ ─ ─ ┘
┌ ─ ─ ─ ─ ─ ─ ─ ─ ─ ─ ┴ ─ ─ ─ ─ ─ ─ ─ ─ ┐
│                  S6                   │
│   Estimate slip of one or more wheels of │
│           the driven wheel axle        │
└ ─ ─ ─ ─ ─ ─ ─ ─ ─ ─ ┬ ─ ─ ─ ─ ─ ─ ─ ─ ┘
┌─────────────────────┴──────────────────┐
│                  S7                   │
│   Use the estimated wheel torque while │
│   performing an action associated with the │
│                vehicle                 │
└────────────────────────────────────────┘
```

Fig. 5

S7
Using the estimated wheel torque while operating the vehicle

S7a
Control an engine to apply a drive torque on the driven wheel axle, based on the estimated wheel torque

S7b
Estimate a damping of a gear box of the vehicle by comparing the determined wheel torque and a drive torque of the engine

S7c
Estimate efficiency of a powertrain of the vehicle based on a drive torque of the engine, the measured wheel speeds and the estimated wheel torque of the driven wheel axle

S7d
Estimate a tire-road friction coefficient by comparing the slip with the estimated wheel torque of a wheel of the driven wheel axle at individual points in time

Fig. 6

10 ECU

103

104

102
'P'

Fig. 7

Fig. 8

Fig. 9

Europäisches
Patentamt

European
Patent Office

Office européen
des brevets

# EUROPEAN SEARCH REPORT

Application Number

EP 22 17 1230

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 5 754 967 A (INOUE NORIYUKI [JP] ET AL) 19 May 1998 (1998-05-19) | 1-15 | INV.<br>B60W10/04 |
| Y | * column 1, line 39 – line 54 *<br>* column 2, line 64 – column 3, line 7 *<br>* column 12, line 63 – column 14, line 33 *<br>* column 14, line 63 – line 67 *<br>* column 20, line 3 – line 14; claim 1 *<br>----- | 7-9 | B60W40/068<br>G01L3/10 |
| X | US 2012/078475 A1 (LI DONGXU [US] ET AL) 29 March 2012 (2012-03-29)<br>* paragraphs [0024], [0025], [0034]; claim 1; figure 2 *<br>----- | 1,3,6, 11-15 | |
| Y | US 2013/297110 A1 (NEFCY BERNARD D [US] ET AL) 7 November 2013 (2013-11-07)<br>* paragraphs [0034] – [0036], [0041], [0045] – [0056]; figures 3,8 *<br>----- | 7-9 | |

TECHNICAL FIELDS
SEARCHED      (IPC)

B60W
G01L

The present search report has been drawn up for all claims

| Place of search | Date of completion of the search | Examiner |
|---|---|---|
| Munich | 19 October 2022 | Rameau, Pascal |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons
......................................................................................
& : member of the same patent family, corresponding
document

EPO FORM 1503 03.82 (P04C01)

**ANNEX TO THE EUROPEAN SEARCH REPORT
ON EUROPEAN PATENT APPLICATION NO.**                    EP 22 17 1230

This annex lists the patent family members relating to the patent documents cited in  the above-mentioned European search report.
The members are as contained in the European Patent Office EDP file on
The European Patent Office is in no way liable for these particulars which are merely given for the purpose of information.

19-10-2022

| Patent document cited in search report | | Publication date | Patent family member(s) | | Publication date |
|---|---|---|---|---|---|
| US 5754967 | A | 19-05-1998 | DE | 19540899 A1 | 18-07-1996 |
| | | | JP | 3207328 B2 | 10-09-2001 |
| | | | JP | H08169324 A | 02-07-1996 |
| | | | KR | 960021796 A | 18-07-1996 |
| | | | US | 5754967 A | 19-05-1998 |
| US 2012078475 | A1 | 29-03-2012 | CN | 102705506 A | 03-10-2012 |
| | | | DE | 102011114088 A1 | 05-04-2012 |
| | | | US | 2012078475 A1 | 29-03-2012 |
| US 2013297110 | A1 | 07-11-2013 | CN | 103386982 A | 13-11-2013 |
| | | | DE | 102013104654 A1 | 28-11-2013 |
| | | | US | 2013297110 A1 | 07-11-2013 |

EPO FORM P0459

For more details about this annex : see Official Journal of the European Patent Office, No. 12/82